# EUROPÄISCHE PATENTANMELDUNG

(11) **EP 1 249 769 A1**
(43) Veröffentlichungstag der Anmeldung: **16.10.2002**
(21) Anmeldenummer: 01109182.4
(22) Anmeldetag: 12.04.2001
(51) Int. Cl.: G06F 17/60

(54) **System zur Verarbeitung und Verfahren zur Erfassung und Analyse risiko- und/oder chancenbezogener Informationen und Computerprogramm**

(71) Anmelder: SIEMENS AKTIENGESELLSCHAFT, 80333 München (DE)
(72) Erfinder: Haug, Achim, 80804 München (DE); Wittmann, Edgar, Dr., 82131 Gauting (DE)

(57) **Zusammenfassung**

System zur Verarbeitung risiko- und/oder chancenbezogener Informationen, Verfahren zur Erfassung risiko- und/oder chancenbezogener Informationen, Verfahren zur Analyse risikound/oder chancenbezogener Informationen und Computerprogramm.

Ein System zur Verarbeitung risiko- und/oder chancenbezogener Informationen weist mindestens eine erste programmgesteuerte Datenverarbeitungsanlage (DPA1), ein Kommunikationsnetzwerk (LAN) und mindestens eine zweite programmgesteuerte Datenverarbeitungsanlage (DPA2) auf. Die erste programmgesteuerte Datenverarbeitungsanlage (DPA1) weist Mittel zur Erfassung von risiko- und/oder chancenbezogenen Informationen, Mittel zur Gliederung der risiko- und/oder chancenbezogenen Informationen in eine Datenstruktur mit zumindest einem Risikound/oder Chancenidentifikator, einem Wahrscheinlichkeitsindikator, einem Einflußindikator und einem Maßnahmendeskriptor, Mittel zur Generierung zumindest einer Berichtsdatei (RF1), in welcher erfaßte Informationen strukturiert abgespeichert sind, eine Kommunikationnetzwerkschnittstelle und Mittel zum Senden der Berichtsdatei über ein Kommunikationsnetzwerk auf. Die zweite programmgesteuerte Datenverarbeitungsanlage (DPA2) ist über das Kommunikationsnetzwerk (LAN) mit der ersten Datenverarbeitungsanlage (DPA1) verbundenen und weist eine Kommunikationnetzwerkschnittstelle, Mittel zum Empfangen einer Berichtsdatei (RF1), eine Datenbank mit risiko- und/oder chancenbezogenen Informationen, Mittel zum zumindest teilweisen Importieren des Inhalts einer Berichtsdatei (RF1) in die Datenbank, Mittel zur Ermittlung von Korrelationen zwischen Datenbankeinträgen und Mittel zur Verknüpfung miteinander korrelierter Datenbankeinträge auf.

## Beschreibung

System zur Verarbeitung risiko- und/oder chancenbezogener Informationen, Verfahren zur Erfassung risiko- und/oder chancenbezogener Informationen, Verfahren zur Analyse risikound/oder chancenbezogener Informationen und Computerprogramm.

Unternehmensführungsregelungen verlangen von Unternehmen einen nachvollziehbaren Umgang mit ihren unternehmensspezifischen Risiken bzw. Chancen. Dabei sind Risiken bzw. Chancen nicht auf ein einzelnes Gebiet, wie etwa finanzielle Risiken bzw. Chancen beschränkt, sondern sie erstrecken sich auf das gesamte Spektrum des unternehmerischen Handelns. Aus diesem Grund ist eine das jeweilige gesamte Unternehmen umfassende Einrichtung von Risiko- bzw. Chancenbehandlungsverfahren sowie eine Bereitstellung dazu geeigneter Hilfsmittel erforderlich. Die Einrichtung von Verfahren bzw. die Bereitstellung von Hilfsmitteln kann nachhaltige Wettbewerbsvorteile bewirken. Allerdings haben Industrie-Unternehmen bisher verhältnismäßig wenig Aufwand in Verfahren und Systeme für unternehmensweite Risiko- bzw. Chancenbehandlungsmaßnahmen sowie entsprechende Berichts- und Analysesysteme investiert.

Die Aufgabe der vorliegenden Erfindung besteht in der Realisierung einer Organisationseinheiten eines Unternehmens übergreifenden datenverarbeitungstechnischen Behandlung von risiko- und/oder chancenbezogenen Informationen bei minimierter Datenredundanz, -inkonsistenz und -irrelevanz.

Diese Aufgabe wird erfindungsgemäß durch ein System mit den in Anspruch 1 angegebenen Merkmalen, ein Verfahren mit den in Anspruch 10 und 11 angegebenen Merkmalen und ein Computerprogramm mit den in Anspruch 13 und 14 angegebenen Merkmalen gelöst. Vorteilhafte Weiterbildungen der Erfindung sind den abhängigen Ansprüchen zu entnehmen.

Datenredundanzen ergeben sich beispielsweise aus einer doppelten Erfassung von demselben Risiko bzw. derselben Chance durch zwei Organisisationseinheiten eines Unternehmens, die von dem Risiko bzw. der Chance betroffen sind. Eine Minimierung von Datenredundanzen, -inkonsistenzen und -irrelevanzen erfolgt erfindungsgemäß durch eine Gliederung risiko- bzw. chancenbezogener Informationen entsprechend einer einheitliche Datenstruktur. Von der einheitlichen Datenstruktur wird sowohl bei einer Erfassung als auch bei einer Analyse von risiko- bzw. chancenbezogenen Informationen Gebrauch gemacht. Außerdem erfolgt eine Behandlung von Datenredundanzen und -irrelevanzen durch eine Ermittlung von Korrelationen zwischen Datenbankeinträgen mit risiko- bzw. chancenbezogenen Informationen sowie durch eine Verknüpfung miteinander korrelierter Datenbankeinträge. Eine Verminderung von Datenirrelevanzen ergibt sich in diesem Zusamenhang daraus, daß zu irrelevanten Datenbankeinträgen üblicherweise keine korrelierten Datenbankeinträge ermittelt werden können. Infolgedessen entfällt auch eine Vernüpfung irrelevanter Datenbankeinträge mit weiteren Datenbankeinträgen, so daß sich aus einem gegebenen Vernküpfungsgrad ein Relevanzmaß herleiten läßt.

Ein zusätzlicher Aspekt, der sich aus der einheitlichen Datenstruktur ergibt, besteht darin, daß auf diese Weise gegliederte Informationen bereits hinreichend geeignet für eine spätere Risikominimierung bzw. Chancenmaximierung aufbereitet sind.

Ein weiterer Aspekt besteht in der Flexibiltät des erfindungsgemäßen Systems sowie der erfindungsgemäßen Verfahren und Computerprogramme im Hinblick auf eine Verwendung sowohl in kleineren als auch in größeren Unternehmen mit jeweils stark unterschiedlichen technischen Randbedingungen. Solche technischen Randbedingungen ergeben sich beispielsweise aus unternehmensindividuellen Anforderungen an zu übertragende Informationsmengen. Diese Anforderungen haben wiederum Auswirkungen auf die Auswahl und Dimensionierung von Kommunikationsnetzen und auf die Datenhaltung und -verteilung. Dabei ist dem Umstand Rechnung zu tragen, daß Verantwortlichkeiten für eine Risiko- bzw. Chancenbehandlung zunächst eher dezentral sind, während eine Verdichtung risiko- bzw. chancenbezogener Informationen und darauf aufbauende Analysen üblicherweise zentral erfolgen.

Die Erfindung wird nachfolgend an Ausführungsbeispielen anhand der Zeichnung näher erläutert. Es zeigt
- Figur 1: eine schematische Darstellung eines Systems zur Verarbeitung risiko- bzw. chancenbezogener Informationen,
- Figur 2: ein Flussdiagramm für ein Verfahren zur Erfassung risiko- bzw. chancenbezogener Informationen,
- Figur 3: ein Flussdiagramm für ein Verfahren zum Importieren einer Berichtsdatei mit risiko- bzw. chancenbezogenen Informationen in einer Datenbank und
- Figur 4: ein Flussdiagramm für ein Verfahren zur Analyse risiko- bzw. chancenbezogener Informationen.

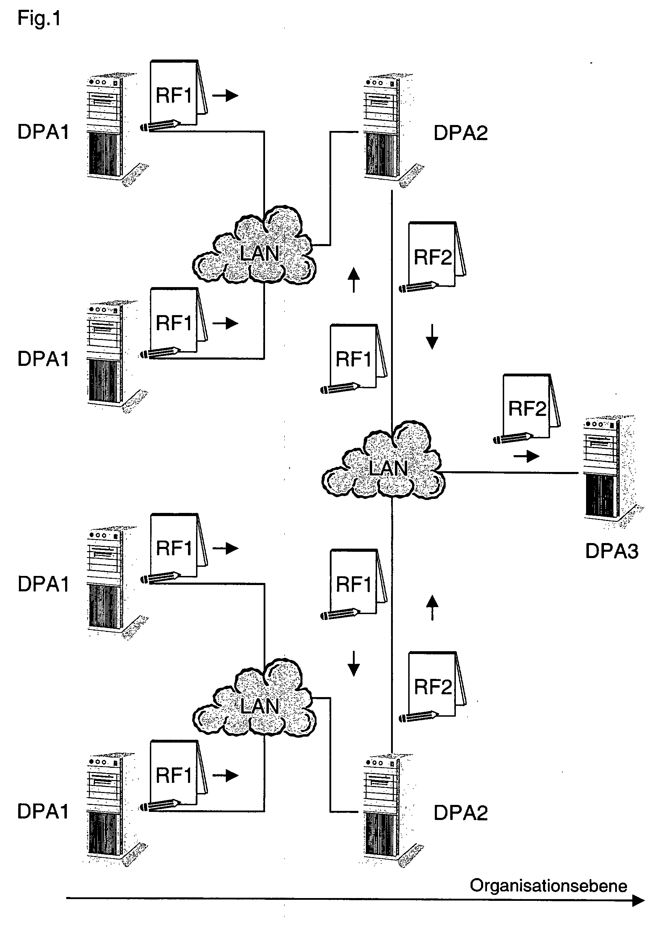

Das in Figur 1 dargestellte System weist vier erste programmgesteuerte Datenverarbeitungsanlagen DPA1, zwei zweite programmgesteuerte Datenverarbeitungsanlagen DPA2, eine weitere zweite Datenverarbeitungsanlage DPA3 und drei lokale Kommunikationsnetzwerke LAN auf. Die Datenverarbeitungsanlagen DPA1-DPA3 weisen jeweils eine nicht näher dargestellte Kommunikationsnetzwerkschnittstelle auf, über die sie mit jeweils einem Kommunikationsnetzwerk LAN verbunden sind. Die ersten Datenverarbeitungsanlagen DPA1 weisen nicht näher dargestellte Mittel zur Erfassung risiko- bzw. chancenbezogener Informationen, Mittel zur Gliederung dieser Informationen in eine Datenstruktur mit zumindest einem Risiko- bzw. Chancenidentifikator, einem Wahrscheinlichkeitsindikator, einem Einflussindikator und einem Maßnahmendiskriptor auf.

Der Risiko- bzw. Chancenidentifikator ist beispielsweise ein Datenstrukturelement, in dem eine Information abgespeichert wird, die ein Risiko bzw. eine Chance eindeutig identifiziert. In entsprechender Weise ist der Wahrscheinlichkeitsindikator ein Datenstrukturelement, das zur Erfassung der Wahrscheinlichkeit dient, mit der ein Risiko bzw. eine Chance auftritt. Der Einflussindikator ist ein Datenstrukturelement mit dem beispielsweise das finanzielle Ausmaß eines Risikos bzw. einer Chance geldbetragsmäßig erfasst wird. Durch den Maßnahmendiskriptor werden beispielsweise Maßnahmen zur Risikominimierung bzw. Chancenmaximierung beschrieben. Datenstrukturelemente sind beispielsweise Speicherelemente einer elektrischen, magnetischen oder optischen Speichereinrichtung.

Des weiteren weisen die ersten Datenverarbeitungsanlagen DPA1 nicht explizit dargestellte Mittel zur Generierung zumindest einer Berichtsdatei RF1, in der die erfassten risiko- bzw. chancenbezogenen Informationen strukturiert abgespeichert werden, und Mittel zum Senden der Berichtsdatei RF1 über das jeweilige Kommunikationsnetzwerk LAN auf. Die über ein Kommunikationsnetzwerk LAN mit den ersten Datenverarbeitungsanlagen DPA1 verbundenen zweiten programmgesteuerten Datenverarbeitungsanlagen DPA2,DPA3 weisen in Figur 1 nicht näher dargestellte Mittel zum Empfangen einer Berichtsdatei RF1, jeweils eine nicht explizit dargestellte Datenbank mit risiko- bzw. chancenbezogenen Informationen und Mittel zum zumindest teilweisen Importieren des Inhalts einer Berichtsdatei RF1 in die Datenbank auf. Des weiteren verfügen die zweiten Datenverarbeitungsanlagen DPA2,DPA3 über Mittel zur Ermittlung von Korrelationen zwischen Datenbankeinträgen und über Mittel zur Verknüpfung miteinander korrelierten Datenbankeinträge. Hierdurch können beispielsweise inhaltlich ähnliche Risiken bzw. Chancen aus verschiedenen Geschäftseinheiten eines Unternehmens identifiziert und zusammengefasst werden.

Entsprechend einer bevorzugten Ausführungsform der Erfindung weisen die zweiten Datenverarbeitungsanlagen DPA2 Mittel zur Generierung einer modifizierten Berichtsdatei RF2 aus miteinander verknüpften Datenbankeinträgen und Mittel zum Versenden der modifizierten Berichtsdatei RF2 an eine weitere zweite Datenverarbeitungsanlage DPA3 auf. Die ersten Datenverarbeitungsanlagen DPA1 werden hinsichtlich der Organisationsebenen eines Unternehmens bereitgestellt, beispielsweise auf Geschäftseinheitsebene, während die zweiten Datenverarbeitungsanlagen DPA2 bzw. die weitere Datenverarbeitungsanlage DPA3 in übergeordneten Geschäftsbereichen bzw. auf Unternehmensleitungsebene genutzt werden.

Die vorliegende Erfindung unterstützt die Erfassung und Meldung von Risiken bzw. Chancen sowie deren Behandlung über sämtliche Organisationsebenen eines Unternehmens hinweg bei dezentralen Verantwortlichkeiten. Auf Unternehmensleitungsebene unterstützt die vorliegende Erfindung eine Analyse und Verknüpfung von Risiken. Der Wert der vorliegenden Erfindung für ein Unternehmen ergibt sich einerseits daraus, dass für Verantwortliche auf Geschäftseinheitsebene ein wirksames Hilfsmittel für eine Risikomilderung und Chancenausnutzung bereitgestellt wird, das sie innerhalb ihres Verantwortungsbereiches auf einfache Weise nutzen können. Andererseits wird ein dazu kompatibles Hilfsmittel bereit gestellt, das eine geschäftsbereichs- bzw. unternehmensweite Analyse der jeweiligen Risiko- bzw. Chancensituation ermöglicht.

Der Informationsaustausch zwischen den ersten Datenverarbeitungsanlagen DPA1 und den zweiten Datenverarbeitungsanlagen DPA2,DPA3 erfolgt durch elektronische Übermittlung von Berichtsdateien RF1,RF2 innerhalb eines gesamten Unternehmens. Da Risiken bzw. Chancen in mehreren unterschiedlichen Organisationsebenen auftreten können, wird beim Importieren einer Berichtsdatei RF1,RF2 die Datenbank einer zweiten Datenverarbeitungsanlage DPA2,DPA3 jeder zu importierenden Berichtsdatei RF1,RF2 eine Organisationsebene zugeordnet. Organisationsebenen sind beispielsweise Projekte, Geschäftseinheiten, Geschäftsgebiete, Geschäftsbereiche, Tochtergesellschaften oder die Unternehmensleitung. Allgemein kann durch die Organisationsebene jede beliebige Organisationseinheit beschrieben werden.

Der Sinn einer Zuordnung von Organisationsebenen beim Importieren von Berichtsdateien RF1,RF2 besteht in einer Vermeidung einer Doppelerfassung bzw. Doppelaggregation desselben Risikos bzw. derselben Chance, das beispielsweise in Berichtsdateien RF1,RF2 von zwei unterschiedlichen Organisationseinheiten auftritt. Die Zuordnung von Organisationsebenen unterstützt darüber hinaus die Verknüpfung ähnlicher Risiken bzw. Chancen. Berichten beispielsweise zwei Geschäftseinheiten eines Geschäftsbereichs über dasselbe Risiko, so können die jeweiligen einzelnen Berichtsdateien RF1 zu einer modifizierten Berichtsdatei RF2 verknüpft werden, in der auf Geschäftsbereichsebene über das jeweilige Risiko berichtet wird. Dies dient einerseits einer Informationsvorverdichtung für die Unternehmensleitung und andererseits einer Ausfilterung von als irrelevant anzusehenden Informationen, die beispielsweise für eine Entscheidungsfindung auf Unternehmensleitungsebene nicht notwendig sind.

In einem beispielhaften Szenario werden durch die vier ersten Datenverarbeitungsanlagen DPA1 risiko- bzw. chancenbezogene Informationen erfasst, entsprechend einer einheitlichen Datenstruktur gegliedert und in Form einer Berichtsdatei RF1 an eine der beiden zweiten Datenverarbeitungsanlagen DPA2 übermittelt. Bei der Übermittlung der Berichtsdatei RF1 von einer ersten Datenverarbeitungsanlage DPA1 an eine zweite Datenverarbeitungsanlage DPA2 werden organisatorische Abhängigkeiten innerhalb eines Unternehmens, beispielsweise zwischen einer Geschäftseinheit und einem übergeordneten Geschäftsbereich, berücksichtigt. Durch die zweiten Datenverarbeitungsanlagen DPA2 werden die empfangenen Berichtsdateien RF1 analysiert und zu einer resultierenden modifizierten Berichtsdatei RF2 verknüpft, die dann an eine weitere zweite Datenverarbeitungsanlage DPA3 übermittelt wird, die wiederum einer übergeordneten Organisationseinheit eines Unternehmens zugeordnet ist.

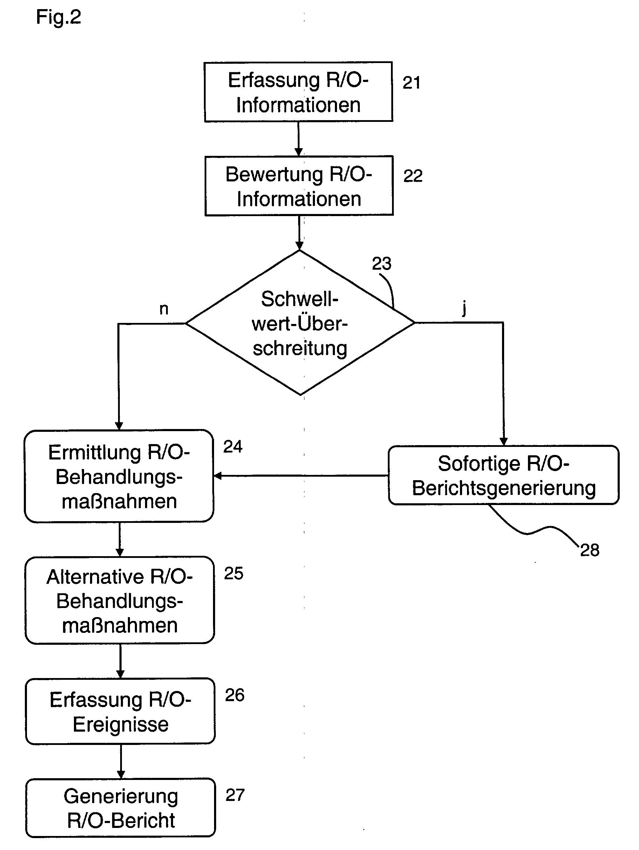

Das in Figur 2 dargestellte Flussdiagramm veranschaulicht ein Verfahren zur Erfassung risiko- bzw. chancenbezogener Informationen. Das Verfahren startet mit einer Erfassung risiko- bzw. chancenbezogener Informationen (Schritt 21), die eine detaillierte Risiko- bzw. Chancenbeschreibung und die Zuordnung eines Risikos bzw. einer Chance zu einer vordefinierten Risiko- bzw. Chancenkategorie umfasst. Zu den erfassten Informationen zählen auch das Datum, an dem ein Risiko bzw. eine Chance identifiziert wurde und der Name des Mitarbeiters, der das Risiko bzw. die Chance als Risiko- bzw. Chanceneigner identifiziert hat. Die erfassten risiko- bzw. chancenbezogenen Informationen können damit auf einen Risiko- bzw. Chancenidentifikator, der beispielsweise einen das Risiko bzw. die Chance bezeichnenden Namen oder einen eindeutigen Identifikationsschlüssel enthält, und einen zusätzlichen Risiko- bzw. Chancendiskriptor, der beispielsweise eine Kurzbeschreibung für das Risiko bzw. die Chance enthält, abgebildet werden.

Das identifizierte Risiko bzw. die identifizierte Chance wird nachfolgend anhand der Wahrscheinlichkeit und des Einflusses des Risikos bzw. der Chance auf eine Organisationseinheit eines Unternehmens bewertet (Schritt 22). Die Bewertung der Wahrscheinlichkeit und des Einflusses erfolgt dabei für einen Zustand ohne Einleitung von Risiko- bzw. Chancenbehandlungsmaßnahmen. Die bei der Bewertung des Risikos bzw. der Chance gewonnenen Informationen werden abschließend einem Wahrscheinlichkeitsindikator und einem Einflussindikator für das Risiko bzw. für die Chance zugeordnet.

Aus dem Wahrscheinlichkeitsindikator und dem Einflussindikator wird dann ein Risiko- bzw. Chancenwert berechnet, der mit einem vorgebbaren Schwellwert verglichen wird (Schritt 23).

Überschreitet der Risiko- bzw. Chancenwert den Schwellwert, so erfolgt eine automatische Generierung einer Berichtsdatei RF1, die automatisch an eine zweite Datenverarbeitungsanlage DPA2,DPA3 versendet wird, die einem vorgegebenen Benutzer zugeordnet ist (Schritt 28). Beispielsweise wird eine solche sofort generierte Berichtsdatei RF1 von einer ersten Datenverarbeitungsanlage DPA1 auf Geschäftseinheitsebene direkt an eine weitere zweite Datenverarbeitungsanlage DPA3 auf Unternehmensleitungsebene versendet. Daraufhin werden für alle Risiken bzw. Chancen unabhängig von einer Schwellwertüberschreitung Risiko- bzw. Chancenbehandlungsmaßnahmen ermittelt, die dazu geeignet sind, ein Risiko zu minimieren bzw. eine Chance zu maximieren (Schritt 24).

Die ermittelten Risiko- bzw. Chancenbehandlungsmaßnahmen werden dann auf einen Maßnahmendiskriptor abgebildet. Eine konkrete Spezifizierung von Risiko- bzw. Chancenbehandlungsmaßnahmen erfolgt in einer Aktivitätenliste, die einem Maßnahmendiskriptor zugeordnet wird. Die Aktivitätenliste enthält eine Beschreibung der jeweiligen Handlungmaßnahme, eine Angabe der verantwortlichen Person, Angaben über benötigte Ressourcen, Kosten der Handlungsmaßnahmen, ein Fälligkeitsdatum, den Zustand sowie eine Berichts- und Überwachungsbeschreibung.

Bei der Ermittlung der Risiko- bzw. Chancenbehandlungsmaßnahmen erfolgt außerdem die Bewertung des Risikos bzw. der Chance für einen Zustand nach Einleitung von Risiko- bzw. Chancenbehandlungsmaßnahmen, die durch den Maßnahmendiskriptor bezeichnet sind. Entsprechend einer bevorzugten Ausgestaltung der Erfindung erfolgt bei der Ermittlung von Risiko- bzw. Chancenbehandlungsmaßnahmen zusätzlich eine Berechnung von Kosten, die mit den in der Aktivitätenliste spezifizierten Risiko- bzw. Chancenbehandlungsmaßnahmen verbunden sind. Die berechneten Kosten werden außerdem mit dem Risiko- bzw. Chancenwert verglichen. Das Ergebnis des Vergleichs wird gespeichert.

Für den Fall, dass ein Risiko bzw. eine Chance vor Wirksamkeit von spezifizierten Handlungsmaßnahmen eskaliert bzw. eine Zielverfehlung droht, werden im voraus alternative Risiko- bzw. Chancenbehandlungsmaßnahmen in Form eines Notfallplans spezifiziert (Schritt 25). Zusätzlich erfolgt eine Erfassung risiko- bzw. chancenrelevanter Ereignisse, die während der Dauer eines Risikos oder einer Chance auftreten (Schritt 26). Risiko- bzw. chancenrelevante Ereignisse sind beispielsweise Änderungen bei verantwortlichen Personen oder Neubewertungen. Abschließend wird auf Basis der erfassten und ermittelten risiko- bzw. chancenbezogenen Informationen eine Berichtsdatei RF1 generiert (Schritt 27). Eine solche Berichtsdatei RF1 enthält Informationen, die in Form eines Risiko- bzw. Chancenidentifikators, eines Wahrscheinlichkeitsidentifikators, eines Einflussindikators, eines Maßnahmendiskriptors und eines Risiko- bzw. Chancendiskriptors strukturiert sind. Die Berichtsdatei RF1 weist dabei jeweils einen Abschnitt mit einem Wahrscheinlichkeits- bzw. Einflussindikator für einen Zustand nach und gegebenenfalls vor Einleitung der Risiko- bzw. Chancenbehandlungsmaßnahmen auf, die durch den Maßnahmendiskriptor bezeichnet sind. Außerdem kann die Berichtsdatei RF1 einen Abschnitt mit einem Maßnahmenumsetzungsindikator aufweisen, der den Umsetzungsgrad von Risiko- bzw. Chancenbehandlungsmaßnahmen angibt. Eine durch eine zweite Datenverarbeitungsanlage DPA2 modifizierte Berichtsdatei RF2 weist einen vergleichbaren Aufbau und Inhalt auf. Die Berichtsdatei RF1 und die modifizierte Berichtsdatei RF2 können beispielsweise im Rahmen eines Quartalsreportings erstellt werden.

Die Implementierung des Verfahrens, das durch das Flussdiagramm in Figur 2 veranschaulicht wird, erfolgt sinnvollerweise durch ein Computerprogramm. Das Computerprogramm ist dabei beispielsweise auf einem nichtflüchtigen Speichermedium einer ersten Datenverarbeitungsanlage DPA1 oder in einem Datennetz abgespeichert und in einen Arbeitsspeicher einer ersten Datenverarbeitungsanlage DPA1 ladbar. Ein solches Computerprogramm weist Codeabschnitte auf, bei deren Ausführung die vorangehend beschriebenen Schritte durchgeführt werden.

Die ersten Datenverarbeitungsanlagen DPA1 werden auf operativer Geschäftsebene eingesetzt und bieten die Möglichkeit verschiedener Auswertungsarten. Eine übersichtsartige Berichtsdatei bzw. Auswertung gibt alle in einer Risiko- bzw. Chancendatenbank erfassten Risiken bzw. Chancen mit Schlüsselinformation wie Wahrscheinlichkeit und Einfluss wieder. Eine weitere Berichtsdatei- bzw. Auswertungsart ist eine nach Risikoeignern, d.h. Personen, die für die Behandlung eines Risikos bzw. einer Chance verantwortlich sind, gegliederte Berichtsdatei bzw. Auswertung. Dabei erfolgt eine Sortierung nach den Namen der Risikoeigner. Dies befähigt eine für ein Risiko- bzw Chancenmanagement verantwortliche Person, Verantwortlichkeiten für einzelne Risiken bzw. Chancen ausfindig zu machen. Dies dient als hilfreiches Werkzeug, um beispielsweise Arbeitsbesprechungen mit bestimmten Risiko- bzw. Chanceneignern vorzubereiten. Eine weitere Berichtsdatei- bzw. Auswertungsart ist eine nach ausstehenden Handlungsmaßnahmen gegliederte Berichtsdatei. Hierfür wird das aktuelle Datum mit dem Fälligkeitsdatum für die Behandlung eines Risiko bzw. einer Chance verglichen, wobei alle überfälligen Handlungsmaßnahmen ausgefiltert werden. Dies befähigt eine für das Risiko- bzw. Chancenmanagement verantwortliche Person zu einer Weiterverfolgung des Risikos bzw. der Chance mit dem jeweiligen Risiko bzw. Chanceneigner.

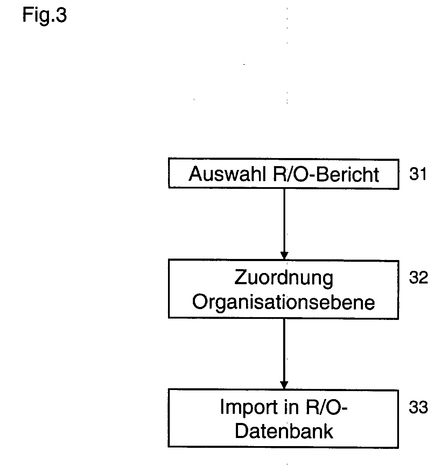

Nach Erstellung einer Berichtsdatei RF1 mittels einer ersten Datenverarbeitungsanlage DPA1 wird diese an eine zugeordnete zweite Datenverarbeitungsanlage DPA2 übermittelt und in eine dort vorhandene Datenbank mit risiko- bzw. chancenbezogenen Informationen importiert. Entsprechend dem in Figur 3 dargestellten Ablaufdiagramm, wird zunächst wird eine geeignete Berichtsdatei RF1 ausgewählt (Schritt 31). Nachfolgend wird der zu importierenden Berichtsdatei RF1 eine Organisationsebene zugeordnet (Schritt 32). Dies ist wichtig, damit bei einer Verknüpfung mehrerer Berichtsdateien RF1 zu einer resultierenden, modifizierten Berichtsdatei RF2, die Organisationsebenen, auf denen die jeweiligen Berichtsdateien RF1 generiert wurden, berücksichtigt werden können. Abschließend wird die Berichtsdatei RF1 automatisch in eine Datenbank mit risiko- bzw. chancenbezogenen Informationen einer zweiten Datenverarbeitungsanlage DPA2 importiert (Schritt 33). In ähnlicher Weise kann auch eine modifizierte Berichtsdatei RF2 an eine weitere zweite Datenverarbeitungsanlage DPA3 übermittelt und dort in eine Datenbank importiert werden.

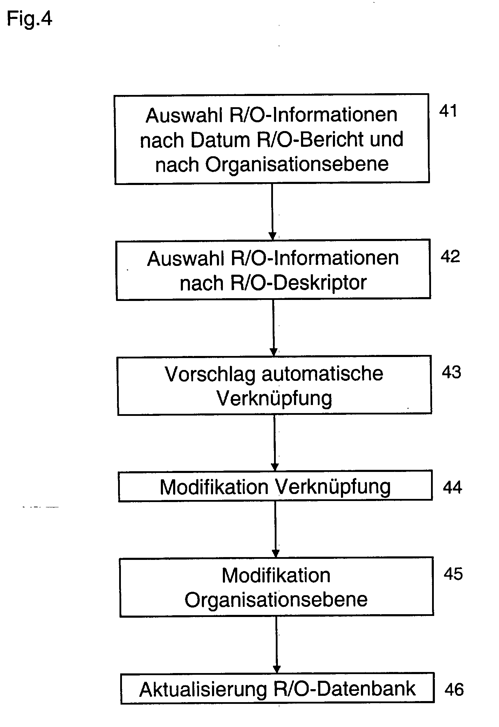

Nachdem eine Berichtsdatei RF1 oder eine modifizierte Berichtsdatei RF2 in eine Datenbank importiert worden ist, kann eine Verknüpfung von Datenbankeinträgen erfolgen, die risiko- bzw. chancenbezogene Informationen enthalten. Ein Flussdiagramm für ein solches Verfahren ist in Figur 4 dargestellt. Zunächst werden risiko- bzw. chancenbezogene Informationen nach dem Datum einer Berichtsdatei RF1,RF2 und nach der Organisationsebene ausgewählt, die der jeweiligen Berichtsdatei RF1,RF2 beim Importieren zugewiesen worden sind (Schritt 41). Hierdurch wird eine Zusammenstellung aller Risiken bzw. Chancen auf der jeweiligen Organisationsebene erzeugt, so dass nachfolgend Risiken bzw. Chancen von der selben Quelle bzw. mit dem selben Thema für eine Verknüpfung anhand des Risiko- bzw. Chancendeskriptors ausgewählt werden können (Schritt 42). Nachfolgend erzeugt die jeweilige zweite Datenverarbeitungsanlage DPA2,DPA3 einen automatischen Verknüpfungsvorschlag für die zuvor ausgewählten Risiken bzw. Chancen (Schritt 43). Hierzu werden beispielsweise anhand des Risiko- bzw. Chancendeskriptors oder des Risiko- bzw. Chancenidentifikators Korrelationen zwischen Datenbankeinträgen ermittelt. Miteinander korrelierte Datenbankeinträge werden automatisch verknüpft. Die Einflussindikatoren werden dabei beispielsweise anhand der jeweiligen Erwartungswerte verknüpft und auf den nächstwahrscheinlichen Wertebereich gerundet.

Nachfolgend besteht die Möglichkeit, die vorgeschlagene automatische Verknüpfung zu modifizieren (Schritt 44). Dies erfolgt beispielsweise durch manuelle Anpassung der verknüpften bzw. aggregierten Bewertung eines Risikos bzw. einer Chance hinsichtlich Einfluss und Wahrscheinlichkeit. Weitere Anpassungsmöglichkeiten bestehen bei der Risiko- bzw. Chancenbeschreibung, der Beschreibung der Risiko- bzw. Chancenbehandlungsmaßnahmen, der Einteilung in eine Risiko- bzw. Chancenkategorie oder anderen relevanten Informationen. Anschließend erfolgt eine Modifikation der den verknüpften Datenbankeinträgen zugeordneten Organisationsebene (Schritt 45). Die Organisationsebene wird dabei entsprechend dem Adressaten einer modifizierten, aus den verknüpften Datenbankanträgen generierten Berichtsdatei RF2 angepasst. Im Regelfall wird hierbei die nächsthöhere Organisationsebene angegeben. Abschließend erfolgt eine Aktualisierung der Datenbank mit risiko- bzw. chancenbezogenen Informationen durch Abspeicherung der verknüpften Datenbankeinträge (Schritt 46). Beim Speichern der neuen Datenbankeinträge erzeugt die jeweilige zweite Datenverarbeitungsanlage DPA2,DPA3 automatisch Verknüpfungen zwischen den ausgewählten Risiken bzw. Chancen und den resultierenden, verknüpften Risiken bzw. Chancen. Hierdurch ist nachvollziehbar, welche Risiken bzw. Chancen miteinander zu einem resultierenden Risiko bzw. einer resultierenden Chance verknüpft wurden.

Die Implementierung des durch das Flussdiagramm in Figur 4 veranschaulichten Verfahrens erfolgt sinnvollerweise durch ein Computerprogramm, das in einen Arbeitsspeicher der jeweiligen zweiten Datenverarbeitungsanlage DPA2,DPA3 ladbar ist und Codeabschnitte aufweist, bei deren Ausführung die vorangehend beschriebenen Schritte durchgeführt werden.

Für die zweiten Datenverarbeitungsanlagen DPA2,DPA3 sind Computerprogramme mit zusätzlichen Berichts- und Analysefunktionen vorgesehen. Für jeden Bericht bzw. jede Analyse muß zunächst das Datum der Berichtsdatei und die Organisationsebene ausgewählt werden. Beispielsweise können die Risiken bzw. Chancen mit den größten Auswirkungen für ein festgelegtes Datum und eine vorgegebene Organisationsebene ausgewählt werden. Für die zehn bedeutsamsten Risiken und Chancen kann beispielsweise ein Portfoliodiagramm erstellt werden, in dem Einfluss und Wahrscheinlichkeit der jeweiligen Chancen bzw. Risiken graphisch visualisiert sind.

Eine weitere Analysefunktion ist beispielsweise die Berechnung des erwarteten Einflusses sämtlicher Risiken bzw. Chancen für einzelne Geschäftseinheiten eines Unternehmens im Hinblick auf ein vorgegebenes Berichtsdatum und auf eine vorgegebene Organisationsebene. Hierdurch ist es möglich eine für alle betrachteten Geschäftseinheiten vergleichende Bewertung hinsichtlich des Risiko- bzw. Chancenpotenzials der einzelnen Geschäftseinheiten anzustellen.

Weitere Analysemöglichkeiten bestehen in einer Gegenüberstellung der Risiken und Chancen für eine Geschäftseinheit eines Unternehmens, um für die betrachteten Geschäftseinheiten zu ermitteln, ob dort Risiken oder Chancen überwiegen. Dies gilt sowohl für ein einziges Berichtsdatum als Beurteilungsgrundlage als auch für einen gegenüberstellenden Vergleich auf Basis von für unterschiedliche Zeitpunkte erstellten Berichten, um eine zeitliche Entwicklung von Risiken bzw. Chancen einer Geschäftseinheit beurteilen zu können. Ein solcher zeitlicher Vergleich kann analog auch für die vorgenannten Analysen bzw. Berichte generiert werden.

Die vorliegende Erfindung ist nicht allein auf die hier beschriebenen Ausführungsbeispiele beschränkt.

## Patentansprüche

1. System zur Verarbeitung risiko- und/oder chancenbezogener Informationen mit
- mindestens einer ersten programmgesteuerten Datenverarbeitungsanlage (DPA1), welche Mittel zur Erfassung von risiko- und/oder chancenbezogenen Informationen, Mittel zur Gliederung der risiko- und/oder chancenbezogenen Informationen in eine Datenstruktur mit zumindest einem Risikound/oder Chancenidentifikator, einem Wahrscheinlichkeitsindikator, einem Einflußindikator und einem Maßnahmendeskriptor, Mittel zur Generierung zumindest einer Berichtsdatei (RF1), in welcher erfaßte Informationen strukturiert abgespeichert sind, eine Kommunikationnetzwerkschnittstelle und Mittel zum Senden der Berichtsdatei über ein Kommunikationsnetzwerk aufweist,
- einem Kommunikationsnetzwerk (LAN),
- mindestens einer über das Kommunikationsnetzwerk (LAN) mit der ersten Datenverarbeitungsanlage (DPA1) verbundenen zweiten programmgesteuerten Datenverarbeitungsanlage (DPA2), welche eine Kommunikationnetzwerkschnittstelle, Mittel zum Empfangen einer Berichtsdatei (RF1), eine Datenbank mit risiko- und/oder chancenbezogenen Informationen, Mittel zum zumindest teilweisen Importieren des Inhalts einer Berichtsdatei (RF1) in die Datenbank, Mittel zur Ermittlung von Korrelationen zwischen Datenbankeinträgen und Mittel zur Verknüpfung miteinander korrelierter Datenbankeinträge aufweist.

2. System nach Anspruch 1,
**dadurch gekennzeichnet, daß** die zweite Datenverarbeitungsanlage (DPA2) Mittel zur Generierung einer modifizierten Berichtsdatei (RF2) aus miteinander verküpften Datenbankeinträgen und Mittel zum Versenden der modifizierten Berichtsdatei (RF2) an zumindest eine weitere zweite Datenverarbeitungsanlage (DPA3) aufweist.

3. System nach einem der Ansprüche 1 oder 2,
**dadurch gekennzeichnet, daß** die erste (DPA1) und/oder die zweite Datenverarbeitungsanlage (DPA2,DPA3) Mittel zum Berechnen eines Risiko- und/oder Chancenwertes aus dem Wahrscheinlichkeitindikator und dem Einflußindikator aufweisen/aufweist.

4. System nach Anspruch 3,
**dadurch gekennzeichnet, daß** die erste (DPA1)und/oder die zweite Datenverarbeitungsanlage (DPA2,DPA3) Mittel zum automatischen Versenden der Berichtsdatei (RF1,RF2) an eine Datenverarbeitungsanlage (DPA2,DPA3), die einem vorgegebenen Benutzer zugeordnet ist, bei einem Schwellwert-Überschreiten des Risiko- und/oder Chancenwertes aufweisen/aufweist.

5. System nach einem der Ansprüche 1 bis 4,
**dadurch gekennzeichnet, daß** die erste Datenverarbeitungsanlage (DPA1) Mittel zur Gliederung der risiko- und/oder chancenbezogenen Informationen in eine Datenstruktur mit einem Risiko- und/oder Chancenidentifikator, einem Wahrscheinlichkeitsindikator, einem Einflußindikator, einem Maßnahmendeskriptor und einem zusätzlichen Risiko- und/oder Chancendeskriptor aufweist.

6. System nach einem der Ansprüche 1 bis 5,
**dadurch gekennzeichnet, daß** die Berichtsdatei (RF1) und/oder die modifizierte Berichtsdatei (RF2) einen Abschnitt mit einem Risiko- und/oder Chancenindikator für einen Zustand nach Einleitung von durch den Maßnahmendeskriptor bezeichneten Risiko- und/oder Chancenbehandlungsmaßnahmen aufweisen/aufweist.

7. System nach einem der Ansprüche 1 bis 6,
**dadurch gekennzeichnet, daß** die Berichtsdatei(RF1) und/oder die modifizierte Berichtsdatei (RF2) zumindest einen Abschnitt mit einer dem Maßnahmendeskriptor zugeordneten Massnahmenumsetzungsindikator aufweisen/aufweist, der den Umsetzungsgrad von Risiko- und/oder Chancenbehandlungsmaßnahmen darstellt.

8. System nach einem der Ansprüche 1 bis 7,
**dadurch gekennzeichnet, daß** die erste (DPA1) und/oder die zweite Datenverarbeitungsanlage (DPA2,DPA3) Mittel zur Berechnung von mit den in einer Aktivitätenliste aufgelisteten Risiko- und/oder Chancenbehandlungsmaßnahmen verbunden Kosten aufweisen/aufweist.

9. System nach Anspruch 8,
**dadurch gekennzeichnet, daß** die erste (DPA1) und/oder die zweite Datenverarbeitungsanlage (DPA2,DPA3) Mittel zum Vergleich der mit den in der Aktivitätenliste aufgelisteten Risiko- und/oder Chancenbehandlungsmaßnahmen verbunden Kosten mit einem Risiko- und/oder Chancenwert aufweisen/aufweist.

10. Verfahren zur Erfassung risiko- und/oder chancenbezogener Informationen, bei dem
- risiko- und/oder chancenbezogene Informationen mittels einer programmgesteuerten Datenverarbeitungsanlage (DPA1) erfaßt werden,
- die risiko- und/oder chancenbezogenen Informationen in eine Datenstruktur mit zumindest einem Risiko- und/oder Chancenidentifikator, einem Wahrscheinlichkeitsindikator, einem Einflußindikator und einem Maßnahmendeskriptor gegliedert werden,
- zumindest eine Berichtsdatei (RF1) generiert wird, in welcher die erfaßten und gegliederten risiko- und/oder chancenbezogenen Informationen abgespeichert werden.

11. Verfahren zur Analyse risiko- und/oder chancenbezogener Informationen, bei dem
- der Inhalt einer Berichtsdatei (RF1), in welcher zumindest nach einem Risiko- und/oder Chancenidentifikator, einem Wahrscheinlichkeitsindikator, einem Einflußindikator und einem Maßnahmendeskriptor gegliederte risiko- und/oder chancenbezogene Informationen abgespeichert sind, mittels einer programmgesteuerten Datenverarbeitungsanlage (DPA2, DPA3) zumindest teilweise in eine Datenbank mit risikound/oder chancenbezogenen Informationen importiert wird,
- Korrelationen zwischen Datenbankeinträgen ermittelt werden,
- miteinander korrelierte Datenbankeinträge verknüpft werden.

12. Verfahren nach Anspruch 11,
**dadurch gekennzeichnet, daß**
- die risiko- und/oder chancenbezogenen Informationen in der Berichtsdatei (RF1) nach einem Risiko- und/oder Chancenidentifikator, dem Wahrscheinlichkeitsindikator, einem Einflußindikator, einem Maßnahmendeskriptor und einem zusätzlichen Risiko- und/oder Chancendeskriptor gegliedert abgespeichert sind,
- die Korrelationen zwischen Datenbankeinträgen anhand des Risiko- und/oder Chancendeskriptors und/oder des Risikound/oder Chancenidentifikators ermittelt werden.

13. Computerprogramm, das in einen Arbeitsspeicher einer Datenverarbeitungsanlage ladbar ist und Codeabschnitte aufweist, bei deren Ausführung
- risiko- und/oder chancenbezogene Informationen erfaßt werden,
- die risiko- und/oder chancenbezogenen Informationen in eine Datenstruktur mit zumindest einem Risiko- und/oder Chancenidentifikator, einem Wahrscheinlichkeitsindikator, einem Einflußindikator und einem Maßnahmendeskriptor gegliedert werden,
- zumindest eine Berichtsdatei (RF1) generiert wird, in welcher die erfaßten und gegliederten risiko- und/oder chancenbezogenen Informationen abgespeichert werden.

14. Computerprogramm, das in einen Arbeitsspeicher einer Datenverarbeitungsanlage ladbar ist und Codeabschnitte aufweist, bei deren Ausführung
- der Inhalt einer Berichtsdatei (RF1), in welcher zumindest nach einem Risiko- und/oder Chancenidentifikator, einem Wahrscheinlichkeitsindikator, einem Einflußindikator und einem Maßnahmendeskriptor gegliederte risiko- und/oder chancenbezogene Informationen abgespeichert sind, zumindest teilweise in eine Datenbank mit risiko- und/oder chancenbezogenen Informationen importiert wird,
- Korrelationen zwischen Datenbankeinträgen ermittelt werden,
- miteinander korrelierte Datenbankeinträge verknüpft werden.

15. Computerprogramm nach Anspruch 14,
**dadurch gekennzeichnet, daß** bei der Ausführung der Codeabschnitte
- die risiko- und/oder chancenbezogenen Informationen in der Berichtsdatei (RF1) nach einem Risiko- und/oder Chancenidentifikator, dem Wahrscheinlichkeitsindikator, einem Einflußindikator, einem Maßnahmendeskriptor und einem zusätzlichen Risiko- und/oder Chancendeskriptor gegliedert abgespeichert sind,
- die Korrelationen zwischen Datenbankeinträgen anhand des Risiko- und/oder Chancendeskriptors und/oder des Risikound/oder Chancenidentifikators ermittelt werden.
